# EUROPEAN PATENT APPLICATION

(11) **EP 1 825 945 A1**
(43) Date of publication of application: **29.08.2007**
(21) Application number: 07003311.3
(22) Date of filing: 16.02.2007
(51) Int. Cl.: B23D 61/04, B23D 61/14, B28D 1/12, B29C 45/14

(54) **Process for obtaining a diamond tool, particulary for cutting stone materials and the like**

(30) Priority: 22.02.2006 IT VR20060038
(71) Applicant: Aros S.r.l., 37010 Affi VR (IT)
(72) Inventor: Fioratti, Stefano, 25015 Desenzano - Brescia (IT)
(74) Representative: Reniero, Cirillo Silvano

(57) **Abstract**

The present invention relates to a process for obtaining at least one abrasive portion for a substantially blade-like cutting tool for cutting building materials comprising the steps of:
- prearranging a mixture comprising at least one abrasive component and at least one filling matrix component based on a mouldable pasty material, and
- injection moulding said mixture in at least one seat (2, 2a, 2b, 2c) of a mould (1, 1a, 1b, 1c).

## Description

The present invention relates to a process for obtaining a diamondblade cutting tool, e. g. a saw blade or disc for the cutting of building materials, such as stones, glass, cement materials and the like.

The discs (in jargon also called "flexible") and the diamond saw blades, as is known, are cutting tools usually comprising a core or a support base body in steel or copper and one or more equidistant abrasive segments or plates fixed peripherally to the core, which in the case of discs are obviously configured as circular rim sectors. The abrasive segments are usually obtained by means of sintering, e. g. hot sintering, of an industrial diamond alloy in a metal powder matrix.

In diamond discs, it is normal to foresee either a single peripheral segment uninterruptedly covering the entire external circumference of the metal core, such peripheral segment being configured as one circular rim, or several peripheral segments configured as circular sectors, arranged at predetermined angular distances from each other.

The diamond discs with a single circular rim peripheral segment (quite often employed for cutting ceramics) and many of the discs having several peripheral segments are usually made by sintering the peripheral segment(s) directly on the core.
Other types of diamond discs with several peripheral segments are made by initially producing peripheral segments by a sintering process and then proceeding with their fixing to the steel core by means of a laser source, or by a brazing or solder-brazing process. The fixing by means of brazing is achieved with melting at the contact zone between core and segment of a solder metal, e. g. a silver alloy which has a lower melting temperature than that of the steel core, and the peripheral segments so as to fix core and segment without the same being subjected to melting.

The production of diamond discs for making prototypes, special products or small product series is instead achieved by means of solder-brazing with oxyacetylene torch.

The so-called "electrodeposited" diamond discs are made with an electrolytic deposition process of industrial diamonds in the peripheral part of the steel core.

In order to protect the metal parts of a diamond disc, in particular when this is designed to be used in the presence of cooling liquids (water) and therefore with the risk of forming rust and attack by other corrosion agents which can deteriorate the mechanical features of the disc, a protective varnish is normally applied on the disc, or alternatively the disc can be covered with one or more layers of a suitable protection material.

The discs or blades with abrasive segments obtained with conventional processes, nevertheless, do not ensure a satisfactory distribution of the diamond in the metal matrix, and for this reason must be "dressed" at pre-established time intervals, e. g. by making the discs or blades work on cement blocks or other relatively hard and resistant material, thus consuming the metal matrix of the segments to bring additional diamonds to the surface, i. e. to uncover them.

Moreover, it is not possible to previously establish after how many work cycles the disc or blade will have to be dressed. It is necessary, in fact, to take into consideration that it is also possible that only some segments must be dressed, while others still have a sufficient number of diamonds at their external work surface. Thus, in order to ensure satisfactory cutting operations, clearly controls are necessary along with frequent maintenance operations of the abrasive segments and thus regulation of the work parameters.

For anchoring the segments to the metal cores, rather complicated and thus costly equipment is required to effectively carry out the sintering or brazing or solder-brazing or electrolysis of the abrasive segments on the metal core.

The discs and blades obtained with conventional processes, moreover, involve, as said, the use of a metal core, which only has a support function for the abrasive segments; on the one hand this leads to the use of (steel) material for obtaining discs/blades and on the other involves a limited useful cutting volume, disc size being equal.

The main object of the present invention is that of providing a process for obtaining a cutting portion of a substantially blade-like cutting tool, e. g. a disc or a blade, which has a homogenous distribution of abrasive particles in its matrix.

Another object of the present invention is that of providing a process for fixing a cutting portion to a substantially blade-like cutting tool in a simple, quick and economical manner.

Another object of the present invention is that of providing a process for obtaining a cutting tool which, by being simpler and quicker to obtain with respect to conventional processes, can be achieved at very competitive costs.

These and still other objects, which will be better apparent below, are achieved by a process for obtaining at least one abrasive portion for a substantially blade-like cutting tool for cutting building materials, comprising the steps of: prearranging a mixture comprising at least one abrasive component and at least one filling matrix component made of a mouldable pasty material; and injection moulding the mixture in at least one seat in a mould.

Advantageously, a process according to the present invention comprises the step of prearranging in the said at least one seat at least one core support element, and injection moulding the mixture around one portion of said at least one core support element.

Further aspects and advantages of the present invention will better appear from the following detailed description of specific embodiments of a process for obtaining a diamond tool according to the present invention, description made with reference to the accompanying drawings, in which:

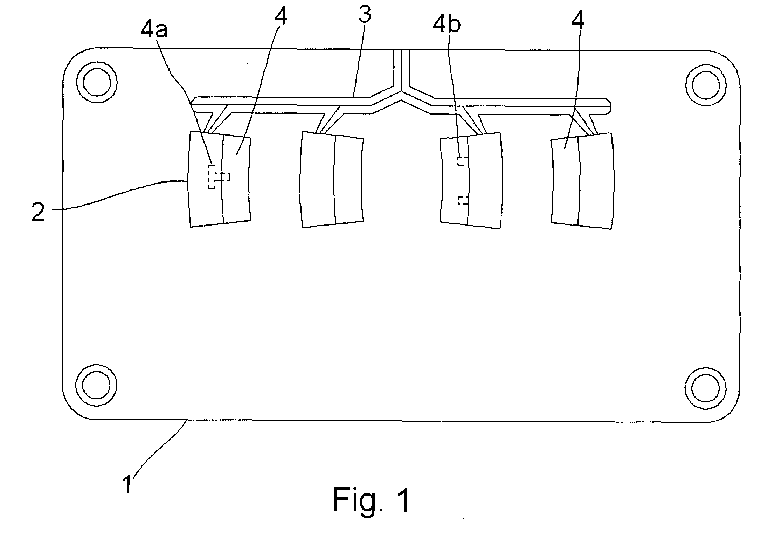

Figures 1-4 are diagrammatic plan views of moulds for carrying out a method according to four different embodiments of the present invention.

In the set of drawings, equivalent or similar parts or components are marked with the same reference numerals.

In Figure 1, a mould 1 is illustrated equipped with seats 2, in which a predetermined mixture can be fed through one or more ducts 3. In the seats 2, a support element 4 can be arranged of an abrasive segment or plate for a substantially blade-like cutting tool, equipped with a cutting surface, at which the tool engages the materials to be cut, and normally with two surfaces delimiting the plane in which the cutting is carried out, substantially transverse to the cutting surface. A substantially blade-like cutting tool comprises, e. g. a diamond saw blade or disc.

The support element 4 can be equipped with engagement and holding means for a moulded mixture, such as a lug, e. g. T-shaped 4a or a notch 4b.

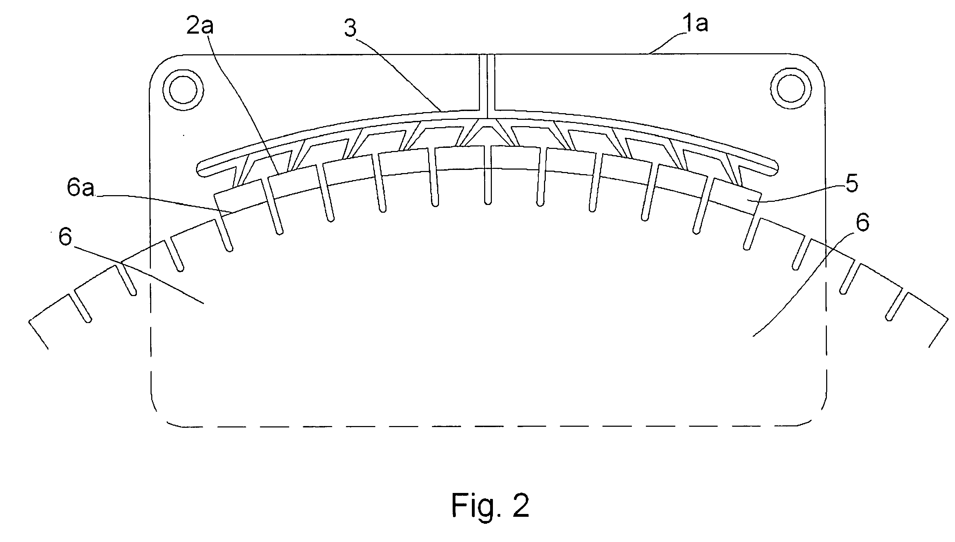

Such engagement means are suitable for preventing rotations or movements of a mixture injected and moulded on a respective support element. With reference to Figures 2-4, a mould 1a, 1b, 1c is illustrated equipped with a seat 2a, 2b, 2c adapted to receive a tool such as a disc or blade or sector of a disc or blade having a series of segments or plates 5 at a peripheral surface thereof.

In the seat 2a, 2b, 2c, a core for example can be housed, e. g. a metal core of a disc 6 or a saw blade 7.

The segments 5 are uniformly angularly displaced from each other along the circumference of the disc 6 or along the longitudinal extension of the blade 7, and can have greater or lesser extension as a function of the uses for which the disc or blade is intended.

A process according to the present invention can be carried out by directly injecting a mixture comprising at least one abrasive component and at least one filling matrix component based on a mouldable pasty material into an seat 1 of a mould and moulding said mixture.

Preferably, the abrasive component comprises granules of at least one component of the group formed by industrial diamond, tungsten carbide, silicon carbide, red-brown corundum, boron nitride, boron carbide.

The mouldable pasty material can be selected from the group comprising olefin polymers, copolymers of styrol or vinyl chloride or vinylacetate, polyvinyl ethers, polyacrylate resins, linear polyamides, mixed polyamides and polyamine products, polyamides (PA), polymethacrylamide, polyamidimide, polyetherimide, thermoplastic polyurethane polymers, crystallizing PA masses, amorphous polyamides, flexible PA copolymers, thermoplastic polyurethane elastomers (TPU), polyolefins, such as polyethylene, copolymers of ethylene, polypropylene, polybutylene-1, polymethylpentene, or styrene polymers, vinyl chloride polymers, such as PVC, the fluoridated polymers, poly(meth)acrylic plastic materials, PMMA (polymethylmethacrylate) molding masses, polycarbonate, polyalkylenterephthalates (PTP), polyarylates, oxides - sulphides (PPS) - linear polyarylic sulphides, modified polyphenylenoxide (PPO), polyarylethers (ketones, polysulfones, PEEK), polysulfone (PS), polyethersulfone (PES), polybutyleneterephthalate (PBT), polyethyleneterephthalate (PET), polyetherimide (PEI), polyphthalamide (PPA) and their mixtures.

In the seat 1 of the mould, at least one core support element 4 can be prearranged, on which a mixture is directly applied as stated above. By moulding, then, the mixture in contact with the support element 4, a segment or plate is obtained which can for example be fixed to a metal core or base body, e. g. made of steel or copper, of a disc or blade through a process similar to those described with reference to the prior art, i. e. by means of soldering, brazing, solder-brazing.

With a method in accordance with the present invention, it is moreover possible to prearrange, in an seat 2a, 2b, 2c of respective mould 1 a, 1b, 1 c, a base body or support core, e. g. shaped as a disc 6 (Figs. 2 and 3) or blade 7 (Fig. 4), or a portion of such core, close the mould, at a peripheral portion 6a, 7a of the core of the disc/blade inject a mixture comprising at least one abrasive element and at least one filling matrix component made of a mouldable pasty material, and mould the mixture.

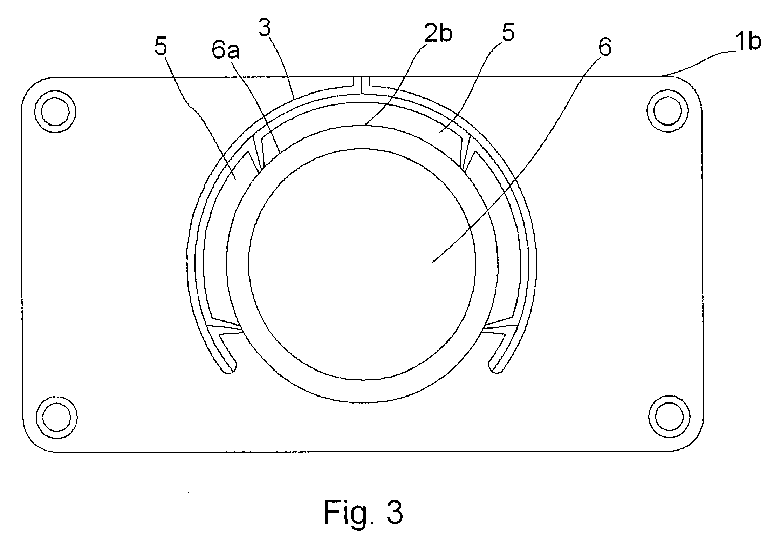

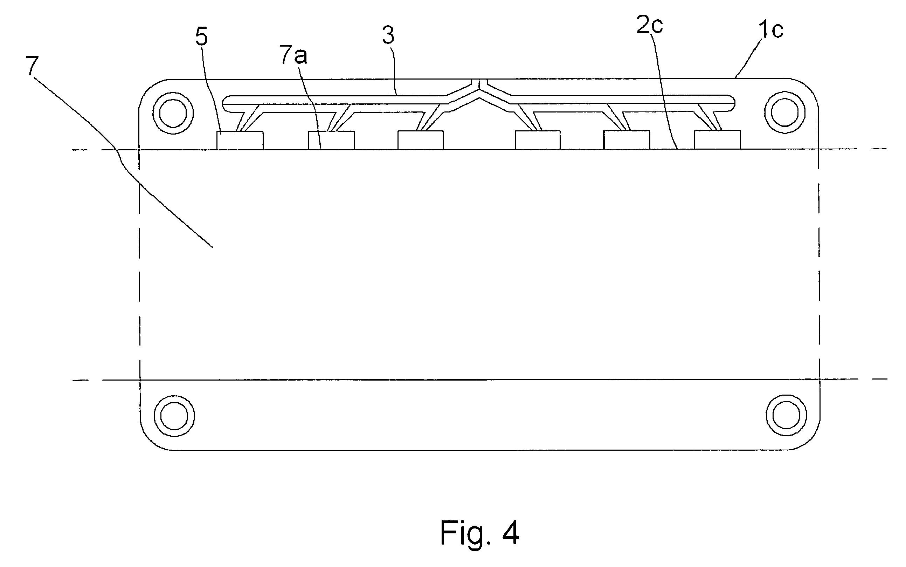

With reference in particular to Figs. 3 and 4, in which the seat 2b, 2c of the mould delimits a disc/blade sector, such steps are repeated, prearranging each time a different sector of the disc/blade core in the seat 2b, 2c until the entire core of the disc/blade is equipped with abrasive segments or plates.

It is also possible to inject a mixture comprising at least one abrasive element and at least one filling matrix element made of a mouldable pasty material, also atop a core or base body prearranged in a mould 1 a, 1 b, 1 c and not necessarily at a peripheral surface thereof, thus obtaining a reinforced cutting tool. In such case, the core will act as a support and stiffening member for the injected and moulded material.

A modification of such process comprises injecting a mixture at a peripheral zone of a disc having a core, on which a mixture has already been injected and moulded as stated above. Such process can be carried out by means of a single mould with a number of nozzles adapted to supply the mixture at the core and with other nozzles adapted to supply the mixture at a peripheral part of the core, or with two different moulds.

Another embodiment of the process according to the present invention is carried out by injecting a mixture in a seat 2a, 2b, 2c of a mould 1a, 1b, 1c and then moulding the mixture in the seat, thus obtaining a disc/blade which is entirely composed of the mixture of abrasive component(s) and filling component(s) with no metal core. One such disc or blade can be used e. g. for cutting with manual (flex) machines or for grinding operations.

By injection moulding a mixture as defined above, one obtains a good distribution of the abrasive component in the filling matrix, due to the continuous mixing which occurs in the ducts 3 during the feeding of the mixture itself to the seats 2, 2a, 2b, 2c.

With a process according to the present invention, it is moreover possible, therefore, to make a disc or blade with abrasive segments or plates which are uniformly distributed along the peripheral surface of the disc/blade, since once the mould is suitably made there is no longer the risk of anchoring two adjacent segments at a distance differing from a predetermined distance.

Moreover, a process according to the present invention can be carried out in a much simpler and quicker manner with respect to the processes proposed up to now, since equipment for soldering, brazing etc. is no longer required, a mould with a specific seat will suffice.

The process for obtaining a diamond tool described above is susceptible to numerous modifications and variations within the protection scope as defined by the claims.

## Claims

1. A process for obtaining at least one abrasive portion for a substantially blade-like cutting tool for cutting building materials **characterized in that** it comprises the steps of:
- prearranging a mixture comprising at least one abrasive component and at least one filling matrix component based on a mouldable pasty material, and
- injection molding said mixture in at least one seat (2, 2a, 2b, 2c) of a mould (1, 1 a, 1b, 1c).

2. A process according to claim 1, **characterized in that** it comprises prearranging in said at least one seat (2) at least one core support element (4), and injection moulding said mixture around a portion of said at least one core support element (4).

3. A process according to claim 2, **characterized in that** it comprises a step of inserting and fixing said core support element (4) to a base body (6, 7) of said cutting tool.

4. A process according to claim 3, **characterized in that** said at least one core support element (4) comprises at least one engaging and holding means (4a, 4b) suitable for preventing movements of said injected and moulded mixture with respect to said at least one core support element (4).

5. A process according to claim 3 or 4, **characterized in that** said base body (6, 7) is made of a metal material.

6. A process according to claim 5, **characterized in that** said metal material comprises steel.

7. A process according to claim 5, **characterized in that** said metal material comprises copper.

8. A process according to any claim 3 to 7, **characterized in that** said step of inserting and fixing is carried out by means of an operation chosen from soldering, brazing, solder-brazing.

9. A process according to claim 1, **characterized in that** in said at least one seat (2a, 2b, 2c), at least one peripheral portion of a base body (6, 7) of said tool is prearranged and said mixture is injection moulded on said at least one peripheral portion of said base body (6, 7).

10. A process according to claim 9, **characterized in that** at least two abrasive portions separated from each other by a predetermined distance at said peripheral zone of said tool are simultaneously moulded.

11. A process according to claim 1, **characterized in that** said mixture is injection moulded in an seat configured as a substantially blade-like cutting tool.

12. A process according to claim 11, **characterized in that** it comprises prearranging a base body acting as a support reinforcement member in said seat, and injection moulding said mixture around said base body to obtain a reinforced cutting tool.

13. A process according to any preceding claim, **characterized in that** said tool comprises a cutting disc.

14. A process according to any claim 1 to 13, **characterized in that** said tool comprises a cutting blade.

15. A process according to any preceding claim, **characterized in that** said abrasive component comprises granules of at least one element selected from the group comprising industrial diamond, tungsten carbide, silicon carbide, red-brown corundum, boron nitride, boron carbide.

16. A process according to any one of the preceding claims, **characterized in that** said mouldable pasty material is selected from the group comprising olefin polymers, copolymers of styrol or vinyl chloride or vinylacetate, polyvinyl ethers, polyacrylate resins, linear polyamides, mixed polyamides and polyamine products, polyamides (PA), polymethacrylamide, polyamidimide, polyetherimide, thermoplastic polyurethane polymers, crystallizing PA masses, amorphous polyamides, flexible PA copolymers, thermoplastic polyurethane elastomers (TPU), polyolefins, such as polyethylene, copolymers of ethylene, polypropylene, polybutylene-1, polymethylpentene, or styrene polymers, vinyl chloride polymers, such as PVC, the fluoridated polymers, poly(meth)acrylic plastic materials, PMMA (polymethylmethacrylate) molding masses, polycarbonate, polyalkylenterephthalates (PTP), polyarylates, oxides - sulphides (PPS) - linear polyarylic sulphides, modified polyphenylenoxide (PPO), polyarylethers (ketones, polysulfones, PEEK), polysulfone (PS), polyethersulfone (PES), polybutyleneterephthalate (PBT), polyethyleneterephthalate (PET), polyetherimide (PEI), polyphthalamide (PPA) and their mixtures.

17. A blade-like cutting tool when obtained by a process according to any claim 1 to 16.
